# EUROPEAN PATENT APPLICATION

(11) **EP 4 273 322 A1**
(43) Date of publication of application: **08.11.2023**
(21) Application number: 22905485.3
(22) Date of filing: 02.06.2022
(51) Int. Cl.: E01C 23/088

(54) **MILLING MACHINE TAIL DOOR CONTROL METHOD, MILLING WORKING APPARATUS, AND MILLING MACHINE**

(30) Priority: 22.03.2022 CN 202210284379
(71) Applicant: Hunan Sany Zhongyi Machinery Co., Ltd., High-tech Zone Yiyang, Hunan 413062 (CN)
(72) Inventor: LIU, Zhibiao, Yiyang, Hunan 413062 (CN); HU, Wengang, Yiyang, Hunan 413062 (CN)
(74) Representative: Rüger Abel Patentanwälte PartGmbB
(86) International application number: PCT/CN2022/096819
(87) International publication number: WO 2023/178832

(57) **Abstract**

The present application relates to the technical field of construction machinery, and to a method for controlling a milling machine tailgate, a milling working device and a milling machine. The method includes: obtaining milling depth information of a milling rotor of a milling machine; and controlling a working state of the milling machine tailgate according to the milling depth information. Through the technical solution of the present application, the working state of the tailgate can be adjusted according to the change of the milling depth of the milling rotor, so that when there is a step-like structure or a raised obstacle on the road surface, the tailgate can be controlled to perform corresponding obstacle avoidance operations to prevent the tailgate from getting stuck, which can effectively reduce the impact on the engine, reduce the failure rate, prolong the service life, and help improve the working efficiency of the milling machine.

## Description

### CROSS-REFERENCE TO RELATED APPLICATIONS

This application claims priority to Chinese Patent Application No. 202210284379.8, filed on March 22, 2022, and titled "METHOD FOR CONTROLLING MILLING MACHINE TAILGATE, MILLING WORKING DEVICE AND MILLING MACHINE", the entire contents of which are incorporated herein by reference.

### TECHNICAL FIELD

The present application relates to the technical field of construction machinery, and in particular to a method for controlling a milling machine tailgate, a milling working device and a milling machine.

### BACKGROUND

When there are bumps or pits on the road surface that cause the milling depth of the milling rotor to change, there will be a step structure or bumps on the moving path of the milling machine tailgate. However, the tailgate of the existing milling machine is usually in a floating state during operation, and it is very easy to get stuck when encountering the above-mentioned step structure or bumps, which will cause the engine to slow down, stall or even be damaged, and affect the normal construction work of the milling machine.

### SUMMARY

The present application provides a method for controlling a milling machine tailgate, a milling working device and a milling machine.

The present application provides a method for controlling a milling machine tailgate, including: operation S 100, obtaining milling depth information of a milling rotor of a milling machine; and operation S200, controlling a working state of the milling machine tailgate according to the milling depth information.

The beneficial effects of the present application are as follows.

The working state of the tailgate can be adjusted according to the change of the milling depth of the milling rotor, so that the tailgate can be controlled to perform corresponding obstacle avoidance operations when obstacles like step structures appear on the road surface, thereby preventing the tailgate from sticking, which can effectively reduce the impact on the engine, reduce the failure rate, prolong the service life, and help to improve the working efficiency of the milling machine.

### BRIEF DESCRIPTION OF THE DRAWINGS

FIG 1 is a schematic flowchart of a method for controlling a milling machine tailgate according to an embodiment of the present application.
FIG 2 is a schematic flowchart of a method for controlling a milling machine tailgate according to an embodiment of the present application.
FIG 3 is a schematic flowchart of a method for controlling a milling machine tailgate according to an embodiment of the present application.
FIG 4 is a schematic flowchart of a method for controlling a milling machine tailgate according to an embodiment of the present application.
FIG 5 is a schematic flowchart of a method for controlling a milling machine tailgate according to an embodiment of the present application.
FIG 6 is a schematic flowchart of a method for controlling a milling machine tailgate according to an embodiment of the present application.
FIG 7 is a schematic flowchart of a method for controlling a milling machine tailgate according to an embodiment of the present application.
FIG 8 is a schematic diagram of a working state of a milling device according to an embodiment of the present application.
FIG 9 is a schematic diagram of a working state of a milling device according to an embodiment of the present application.
FIG 10 is a schematic flowchart of a method for controlling a milling machine tailgate according to an embodiment of the present application.
FIG 11 is a schematic diagram of a working state of a milling device according to an embodiment of the present application.
FIG 12 is a schematic diagram of a working state of a milling device according to an embodiment of the present application.
FIG 13 is a schematic flowchart of a method for controlling a milling machine tailgate according to an embodiment of the present application.
FIG 14 is a schematic diagram of a working state of a milling device according to an embodiment of the present application.
FIG 15 is a schematic diagram of a working state of a milling device according to an embodiment of the present application.
FIG 16 is a schematic diagram of a milling machine according to an embodiment of the present application.
FIG 17 is a schematic block diagram of a milling device according to an embodiment of the present application.
FIG 18 is a schematic diagram of a milling device according to an embodiment of the present application.

Description of reference numbers:
1, milling working device; 11, housing; 12, tailgate assembly; 121, tailgate; 122, tailgate oil cylinder; 13, milling rotor; 14, side slide plate assembly; 141, side slide plate; 142, side plate oil cylinder; 15, detection assembly; 151, pull cord sensor; 16, controller; 2, milling machine; 21, milling machine body; 211, outrigger mechanism.

### DETAILED DESCRIPTION OF THE EMBODIMENTS

In order to better understand the above objects, features and advantages of the present application, the present application will be described in detail below in conjunction with the accompanying drawings and specific embodiments. It should be noted that, in the case of no conflict, the embodiments of the present application and the features in the embodiments can be combined with each other.

In the following description, many specific details are set forth in order to fully understand the present application, however, the present application can also be implemented in other ways than described herein. Therefore, the scope of the present application is not limited by the specific embodiments disclosed below.

The following are some embodiments of a method for controlling a milling machine tailgate, a milling working device and a milling machine in the present application.

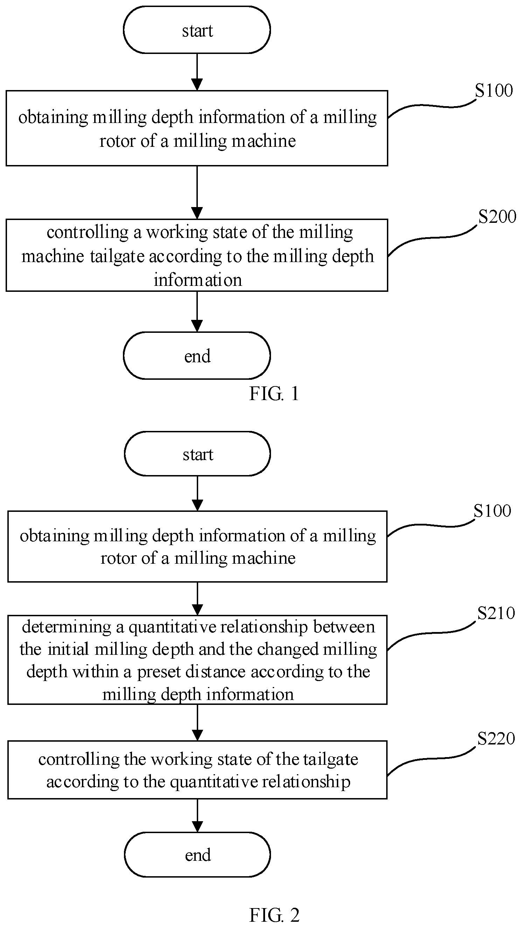

In an embodiment of the present application, as shown in FIG 1, the method for controlling the milling machine tailgate includes:
operation S100, obtaining milling depth information of a milling rotor of a milling machine; and
operation S200, controlling a working state of the milling machine tailgate according to the milling depth information.

In this embodiment, through the operation S 100, the milling depth information of the milling rotor of the milling machine is first grasped as a reference for determining road conditions. If there are bumps or pits on the road surface, the milling depth of the milling rotor will change when the milling machine drives over the road surface, which may produce obstacles similar to step structures on the road surface. In addition, when the operator actively adjusts the milling depth of the milling rotor, if the milling depth becomes shallow (that is, the milling rotor rises), obstacles similar to step structures will also appear on the road surface. Through the operation S200, the working state of the tailgate is controlled with reference to the milling depth of the milling rotor, so that the tailgate can perform corresponding obstacle avoidance operations. The working state of the tailgate includes but not limited to floating state, locked state, and moving state (including rising and falling).

In this embodiment, through the optimization of the control logic of the tailgate, the working state of the tailgate can be adjusted according to the change of the milling depth of the milling rotor, so that the tailgate can be controlled to perform corresponding obstacle avoidance operations when obstacles like step structures appear on the road surface, thereby preventing the tailgate from sticking, which can effectively reduce the impact on the engine, reduce the failure rate, prolong the service life, and help to improve the working efficiency of the milling machine.

In an embodiment of the present application, the milling depth information includes an initial milling depth and a changed milling depth of the milling rotor. As shown in FIG 2, the method for controlling the milling machine tailgate includes:
operation S 100, obtaining the milling depth information of the milling rotor of the milling machine;
operation 210, determining a quantitative relationship between the initial milling depth and the changed milling depth within a preset distance according to the milling depth information; and
operation S220, controlling the working state of the tailgate according to the quantitative relationship.

In this embodiment, the operation S200 is improved on the basis of the foregoing embodiments. Through the operation S210, the magnitude before and after the change of the milling depth within the preset distance is compared to determine the quantitative relationship, so as to determine whether there will be an obstacle similar to a step structure on the road surface according to the change of the milling depth. The preset distance can be specifically set according to factors such as road conditions and the driving speed of the milling machine. Through the operation S220, the working state of the tailgate is controlled based on the quantitative relationship of the milling depth before and after the change, so as to control the tailgate to perform corresponding obstacle avoidance operations when there is an obstacle similar to a step structure on the road surface. The initial milling depth is the milling depth when the milling rotor is milling at the current position of the tailgate of the milling machine. At this time, the milling rotor is in a normal working state and has not encountered obstacles or sunken roads.

The milling machine mainly cuts the road surface through the rotation of the milling rotor. If the milling depth changes during the cutting process, two layers of road surface with different heights will be produced at the corresponding position on the road surface. For example, when the milling depth becomes shallow, a structure similar to an upper step is generated at the joint position of the two-layer road surface. When the milling depth becomes deeper, a structure similar to a lower step is produced at the joint position of the two-layer road surface. The structure of the upper step will hinder the tailgate in the floating state, which will easily cause the tailgate to get stuck.

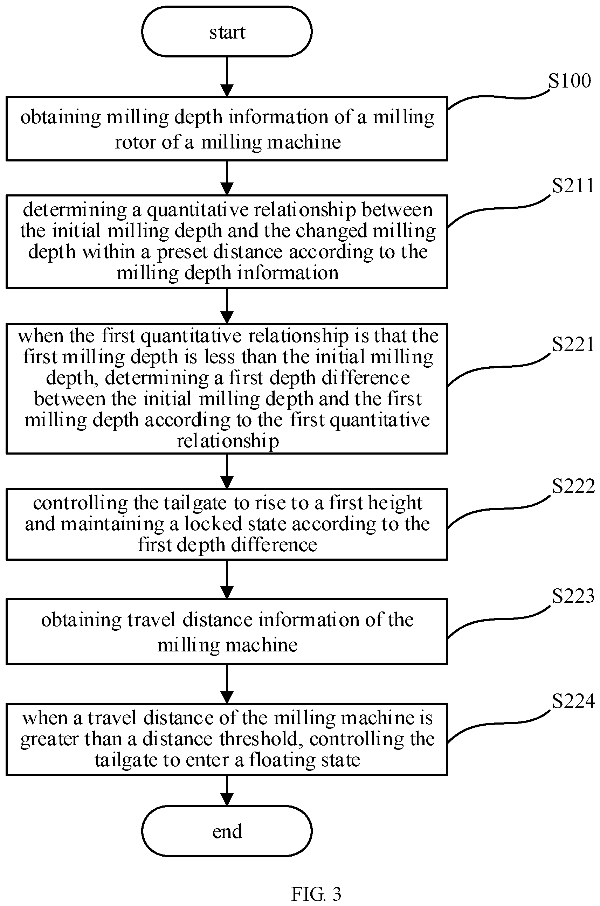

In an embodiment of the present application, as shown in FIG 3, the method for controlling the milling machine tailgate includes:
operation S100, obtaining the milling depth information of the milling rotor of the milling machine;
operation S211, determining a first quantitative relationship between the initial milling depth and the first milling depth within the preset distance according to the milling depth information;
operation S221, when the first quantitative relationship is that the first milling depth is less than the initial milling depth, determining a first depth difference between the initial milling depth and the first milling depth according to the first quantitative relationship;
operation S222, controlling the tailgate to rise to a first height and maintaining a locked state according to the first depth difference;
operation S223, obtaining travel distance information of the milling machine; and
operation S224, when a travel distance of the milling machine is greater than a distance threshold, controlling the tailgate to enter a floating state,
the first height is greater than or equal to the first depth difference.

In this embodiment, improvements are made to operation S210 and operation S220 on the basis of the foregoing embodiments. The changed milling depth includes the first milling depth. Through the operation S211, the first quantitative relationship between the initial milling depth and the first milling depth is determined as a basis for subsequent control operations. Through the operation S221, in the first quantitative relationship, when the first milling depth is less than the initial milling depth, which indicates that the milling depth becomes shallower, and obstacles similar to the upper step structure will be generated at the corresponding position. At this time, the difference between the initial milling depth and the first milling depth (the first depth difference) is determined first, and the first depth difference is the height of the obstacle. Through the operation S222, the tailgate is controlled to rise to a first height, and then keep the locked state, the first height is greater than or equal to the first depth difference, so that when the milling machine travels to a position where the tailgate is opposite to the obstacle, the tailgate can cross the obstacle, thereby preventing the tailgate from being stuck with the obstacle.

In an embodiment, the first height is greater than the first depth difference to allow room for possible deviations. Afterwards, through the operations S223 and S224, it is determined whether the tailgate has crossed the obstacle according to the travel distance of the milling machine. Since the distance between the milling rotor of the milling machine and the tailgate is relatively fixed, it is specifically set by the specific model size of the milling machine. The distance threshold can be set to a value greater than the distance between the milling rotor and the tailgate. When the milling machine travels beyond the distance threshold, it indicates that the tailgate has crossed the obstacle of the step structure on the road. At this time, the working state of the tailgate is adjusted from the locked state to the floating state, so that the tailgate can fit the road again, and the waste can be blocked and collected normally during the subsequent milling operation.

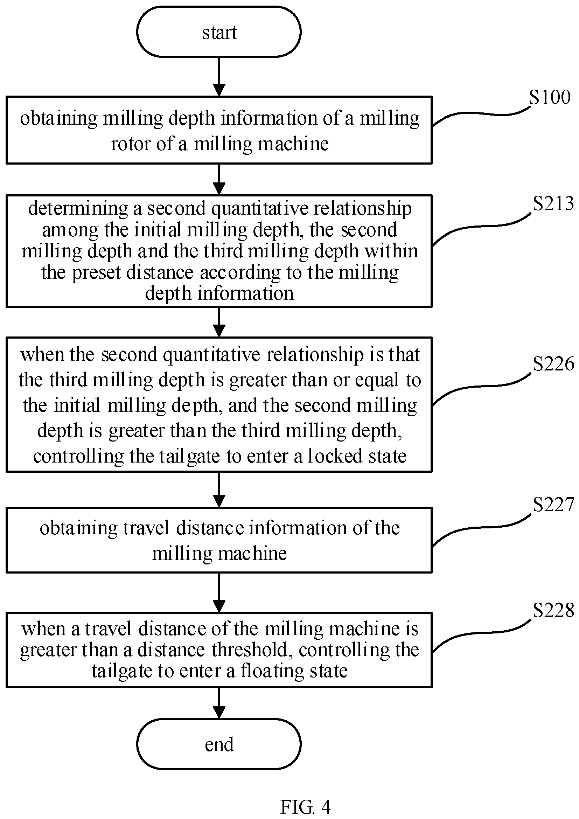

In an embodiment of the present application, as shown in FIG 4, the method for controlling a milling machine tailgate includes:
operation S100, obtaining the milling depth information of the milling rotor of the milling machine;
operation S213, determining a second quantitative relationship among the initial milling depth, the second milling depth and the third milling depth within the preset distance according to the milling depth information;
operation S226, when the second quantitative relationship is that the third milling depth is greater than or equal to the initial milling depth, and the second milling depth is greater than the third milling depth, controlling the tailgate to enter a locked state;
operation S227, obtaining travel distance information of the milling machine; and
operation S228, when a travel distance of the milling machine is greater than a distance threshold, control the tailgate to enter a floating state.

In this embodiment, improvements have been made to the operation S210 and the operation S220 in the above embodiments. The changed milling depths include the second milling depth and the third milling depth, the second milling depth is the milling depth after the first change of the initial milling depth, and the third milling depth is the milling depth after the second change of the initial milling depth, that is, the initial milling depth, the second milling depth, and the third milling depth in time sequence.

Through the operation S213 to the operation S226, the initial milling depth, the second milling depth and the third milling depth are compared firstly, and the second quantitative relationship among the initial milling depth, the second milling depth and the third milling depth is determined. When the second quantitative relationship is that the second milling depth is greater than the third milling depth, and the third milling depth is not less than the initial milling depth, it indicates that the milling depth of the milling rotor first becomes deeper and then becomes shallower, and the final milling depth is greater than or equal to the initial milling depth, and there are pits on the road surface. The height of the road surface at the front end of the pit is equal to the height of the road surface at the rear end of the pit or the height of the road surface at the end driving out of the pit is lower than the height of the road surface at the end entering the pit. At this time, the tailgate is controlled to enter the locked state, when the milling machine travels to the position where the tailgate is opposite to the pit, the tailgate cannot be lowered with the depression of the road surface. Thus, the tailgate can be prevented from being blocked by the upper step structure formed by the side wall of the pit, so as to prevent the tailgate from being stuck.

When the milling machine is running, if the front outrigger mechanism or the rear outrigger mechanism is sunken or sinks into a pit, it will drive the whole car body down, the milling depth of the milling rotor increases accordingly, which will cut a depression at the corresponding position on the road surface.

Through the operation S227 and the operation S228, whether the tailgate has crossed the obstacle is determined according to the travel distance of the milling machine. Since the distance between the milling rotor of the milling machine and the tailgate is relatively fixed, it is set by the model size of the milling machine. The distance threshold can be set to a value greater than the distance between the milling rotor and the tailgate. When the milling machine travels beyond the distance threshold, it indicates that the tailgate has crossed the obstacle similar to a step structure on the road. At this time, the working state of the tailgate is adjusted from the locked state to the floating state, so that the tailgate can fit the road again, and the waste can be blocked and collected normally during the subsequent milling operation.

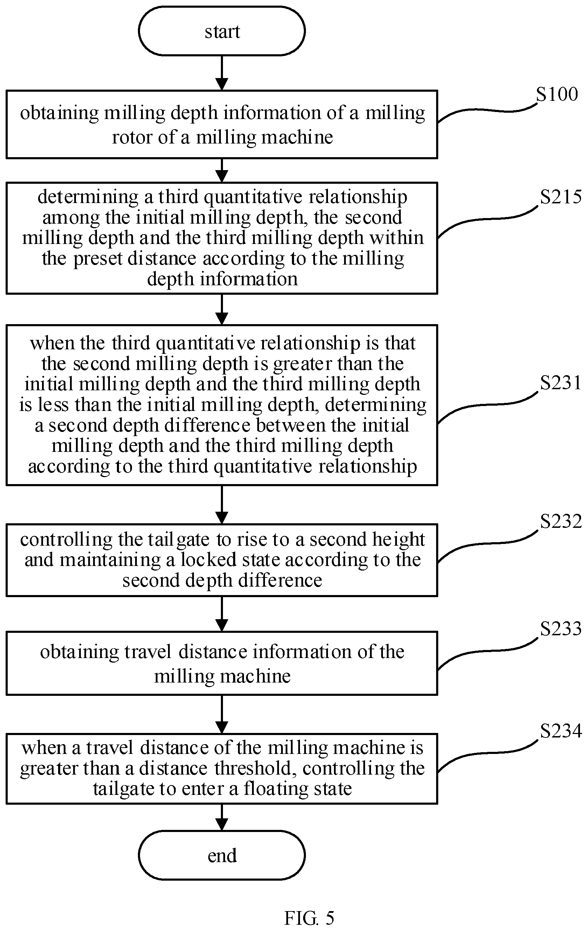

In an embodiment of the present application, as shown in FIG 5, the method for controlling the milling machine tailgate includes:
operation S100, obtaining the milling depth information of the milling rotor of the milling machine;
operation S215, determining a third quantitative relationship among the initial milling depth, the second milling depth and the third milling depth within the preset distance according to the milling depth information;
operation S231, when the third quantitative relationship is that the second milling depth is greater than the initial milling depth and the third milling depth is less than the initial milling depth, determining a second depth difference between the initial milling depth and the third milling depth according to the third quantitative relationship;
operation S232, controlling the tailgate to rise to a second height and maintaining a locked state according to the second depth difference;
operation S233, obtaining travel distance information of the milling machine; and
operation S234, when a travel distance of the milling machine is greater than a distance threshold, controlling the tailgate to enter a floating state,
the second height is greater than or equal to the second depth difference.

In this embodiment, improvements are made to the operation S210 and the operation S220 on the basis of the foregoing embodiments. The changed milling depths include the second milling depth and the third milling depth, the second milling depth is the milling depth after the first change of the initial milling depth, the third milling depth is the milling depth after the second change of the initial milling depth, that is, the initial milling depth, the second milling depth, and the third milling depth in time sequence. Through the operation S215 to the operation S231, the initial milling depth, the second milling depth and the third milling depth are compared firstly to determine the third quantitative relationship among the initial milling depth, the second milling depth and the third milling depth. When the third quantitative relationship is that the second milling depth is greater than the initial milling depth, and the initial milling depth is greater than the third milling depth, which means that the milling depth of the milling rotor first becomes deeper and then becomes shallower, and the final third milling depth is smaller than the initial milling depth, that is, the height of the road surface before entering the pit is lower than the height of the road surface after exiting the pit. The second depth difference between the initial milling depth and the third milling depth is determined through the third quantitative relationship, that is, the rising height of the road surface after passing over the pit. Then through the operation S232, the tailgate is controlled to rise to a second height to keep the tailgate locked. The second height is greater than or equal to the second depth difference, so as to ensure that the tailgate can cross the upper step structure formed by the side wall of the pit, so as to prevent the tailgate from being blocked and causing the tailgate to be stuck.

Through the operation S233 and the operation S234, whether the tailgate has crossed the obstacle is determined according to the travel distance of the milling machine. Since the distance between the milling rotor of the milling machine and the tailgate is relatively fixed, it is set by the model size of the milling machine. The distance threshold can be set to a value greater than the distance between the milling rotor and the tailgate. When the milling machine travels beyond the distance threshold, it indicates that the tailgate has crossed the obstacle similar to a step structure on the road. At this time, the working state of the tailgate is adjusted from the locked state to the floating state, so that the tailgate can fit the road again, and the waste can be blocked and collected normally during the subsequent milling operation.

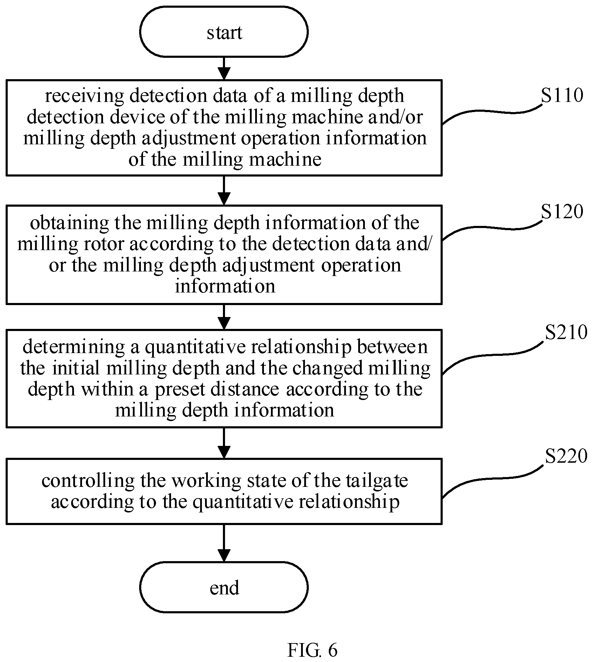

In an embodiment of the present application, as shown in FIG 6, the method for controlling the milling machine tailgate includes:
operation S 110, receiving detection data of a milling depth detection device of the milling machine and/or milling depth adjustment operation information of the milling machine;
operation S 120, obtaining the milling depth information of the milling rotor according to the detection data and/or the milling depth adjustment operation information;
operation 210, determining a quantitative relationship between the initial milling depth and the changed milling depth within a preset distance according to the milling depth information; and
operation S220, controlling the working state of the tailgate according to the quantitative relationship.

In this embodiment, improvements are made to the operation S 100 in the foregoing embodiments. Through operation S 110 and operation S120, the acquisition channel of the milling depth information is defined. The milling depth information can be obtained through the detection data of the milling depth detection device of the milling machine. The milling depth information can also be obtained through the milling depth adjustment operation information of the milling machine (such as the adjustment operation instruction input by the operator). The milling depth information can also be obtained simultaneously according to the detection data of the milling depth detection device and the milling depth adjustment operation information.

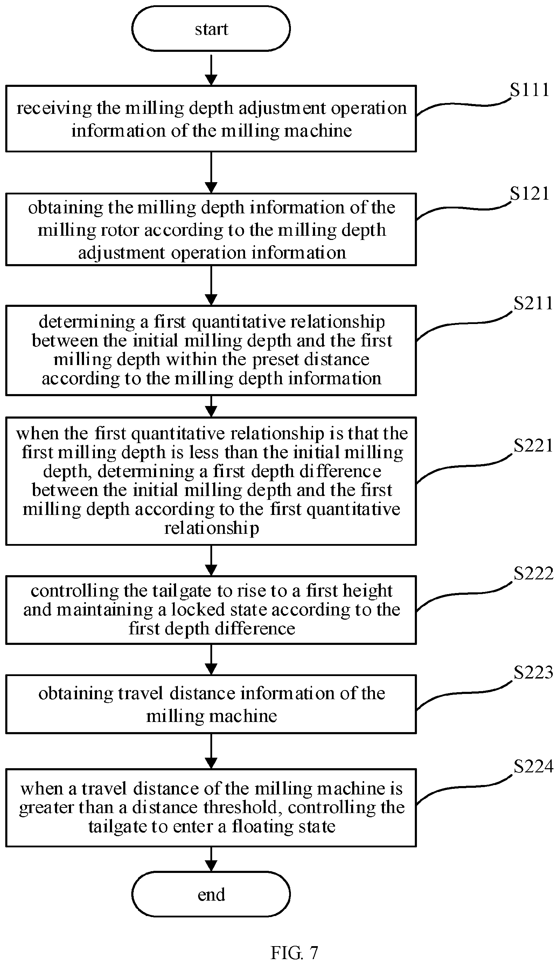

In a specific embodiment of the present application, as shown in FIG 7, the method for controlling the milling machine tailgate includes:
operation S111, receiving the milling depth adjustment operation information of the milling machine;
operation S121, obtaining the milling depth information of the milling rotor according to the milling depth adjustment operation information;
operation S211, determining a first quantitative relationship between the initial milling depth and the first milling depth within the preset distance according to the milling depth information;
operation S221, when the first quantitative relationship is that the first milling depth is less than the initial milling depth, determining a first depth difference between the initial milling depth and the first milling depth according to the first quantitative relationship;
operation S222, controlling the tailgate to rise to a first height and maintaining a locked state according to the first depth difference;
operation S223, obtaining travel distance information of the milling machine; and
operation S224, when a travel distance of the milling machine is greater than a distance threshold, controlling the tailgate to enter a floating state.

The milling depth information includes the initial milling depth and the changed first milling depth of the milling rotor. The initial milling depth is the milling depth when the milling rotor is milling at the current position of the tailgate of the milling machine. The first height is greater than or equal to the first depth difference, and the distance threshold is the horizontal distance between the tailgate and the cutting surface of the milling rotor.

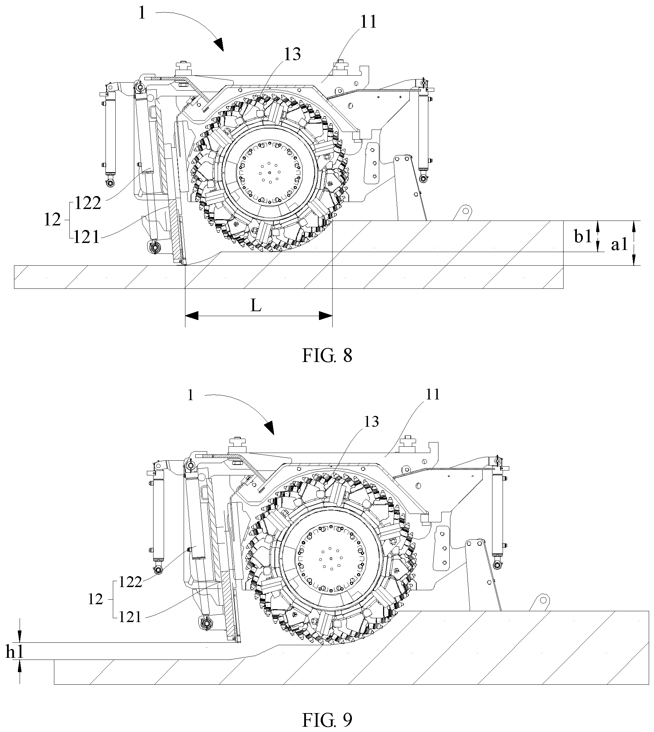

In this embodiment, during the operation of the milling machine, the milling depth adjustment operation information is received, which indicates that the operator has actively adjusted the milling depth, and the milling depth information of the milling rotor is obtained through the milling depth adjustment operation information, and then the initial milling depth a1 and the first milling depth b1 in the milling depth information are obtained. Through the comparison, a first quantitative relationship between the initial milling depth a1 and the first milling depth b1 is determined. When the initial milling depth a1 is greater than the first milling depth b 1, it indicates that the milling depth becomes shallow after adjustment, as shown in FIG 8, and the road surface will have an upper step structure due to the change of the milling depth. At this time, the height of the upper step structure is determined by the first depth difference c1 between the initial milling depth a1 and the first milling depth b1, and then by adjusting the working state of the tailgate, the tailgate enters the moving state from the floating state, and the tailgate is controlled to rise to the first height h1 to keep the locked state, as shown in FIG 9. Until the travel distance of the milling machine is greater than the distance threshold (that is, after the tailgate crosses the upper step structure), the tailgate is controlled to enter the floating state, so that the tailgate can be re-attached to the road surface, and the milling operation is continued. The first height h1 is greater than or equal to the first depth difference.

In this embodiment, for the working condition where the operator actively adjusts the milling depth, and after the milling depth is adjusted shallower, the tailgate is controlled to rise adaptively so as to cross the upper step structure formed on the road surface, and the tailgate is controlled according to the change of the milling depth of the milling rotor.

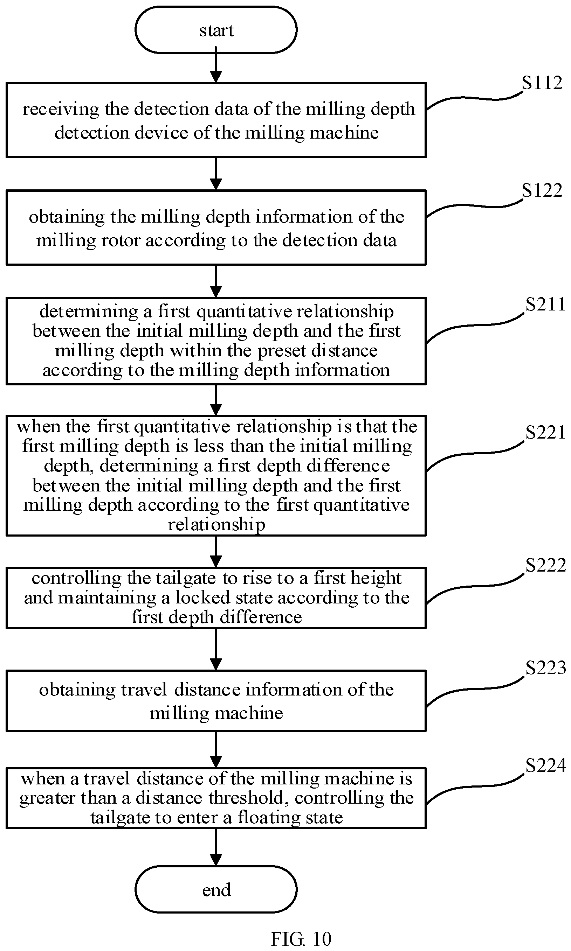

In another specific embodiment of the present application, as shown in FIG 10, the method for controlling the milling machine tailgate includes:
operation S112, receiving the detection data of the milling depth detection device of the milling machine;
operation S122, obtaining the milling depth information of the milling rotor according to the detection data;
operation S211, determining a first quantitative relationship between the initial milling depth and the first milling depth within the preset distance according to the milling depth information;
operation S221, when the first quantitative relationship is that the first milling depth is less than the initial milling depth, determining a first depth difference between the initial milling depth and the first milling depth according to the first quantitative relationship;
operation S222, controlling the tailgate to rise to a first height and maintaining a locked state according to the first depth difference;
operation S223, obtaining travel distance information of the milling machine; and
operation S224, when a travel distance of the milling machine is greater than a distance threshold, controlling the tailgate to enter a floating state.

The milling depth information includes the initial milling depth and the changed first milling depth of the milling rotor. The initial milling depth is the milling depth when the milling rotor is milling at the current position of the milling machine tailgate. The first height is greater than or equal to the first depth difference, and the distance threshold is the horizontal distance between the tailgate and the cutting surface of the milling rotor.

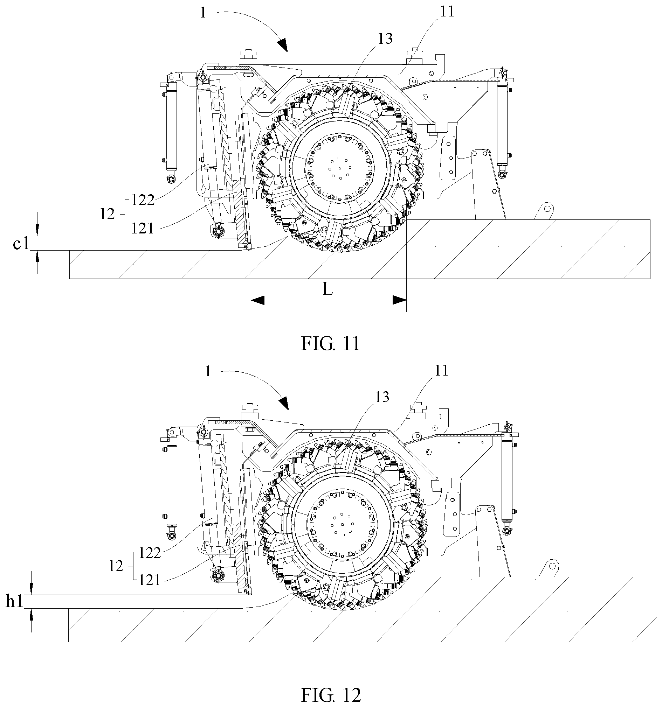

In this embodiment, during the operation of the milling machine, the change of the milling depth of the milling rotor is detected by the milling depth detection device, the milling depth information is obtained according to the detection data, and then the initial milling depth a1 and the first milling depth b1 in the milling depth information are obtained. When the milling depth of the milling rotor changes due to changes in road conditions, the shape of the road surface cut by the milling rotor can be determined through the milling depth information. For example, as shown in FIG 11, when the outrigger mechanism of the milling machine encounters a protrusion, the car body of the milling machine rises as a whole, causing the milling depth of the milling rotor to decrease, which will cut the road surface and form a convex structure on the road surface. A first quantitative relationship between the initial milling depth and the first milling depth is determined by comparing the sizes. When the initial milling depth a1 is greater than the first milling depth b1, it indicates that the milling depth becomes shallower, and a convex structure appears on the road surface due to the change of the milling depth. The height of the convex structure is determined by a first depth difference c1 between the initial milling depth a1 and the first milling depth b1. By adjusting the working state of the tailgate, the tailgate enters the moving state from the floating state, and the tailgate is controlled to rise to the first height h1 to maintain the locked state, as shown in FIG 12, until the travel distance of the milling machine is greater than the distance threshold (that is, after the tailgate crosses the convex structure), the tailgate is controlled to enter the floating state, so that the tailgate can be refitted with the road surface, and the milling operation can be continued. The first height h1 is greater than or equal to the first depth difference c1.

The method for controlling the milling machine tailgate in this embodiment is aimed at the working condition of the milling depth change caused by the road condition change. When a convex structure is formed on the road surface, the tailgate is controlled to rise adaptively to overcome the convex structure formed on the road surface, and the tailgate is controlled according to the change of the milling depth of the milling rotor.

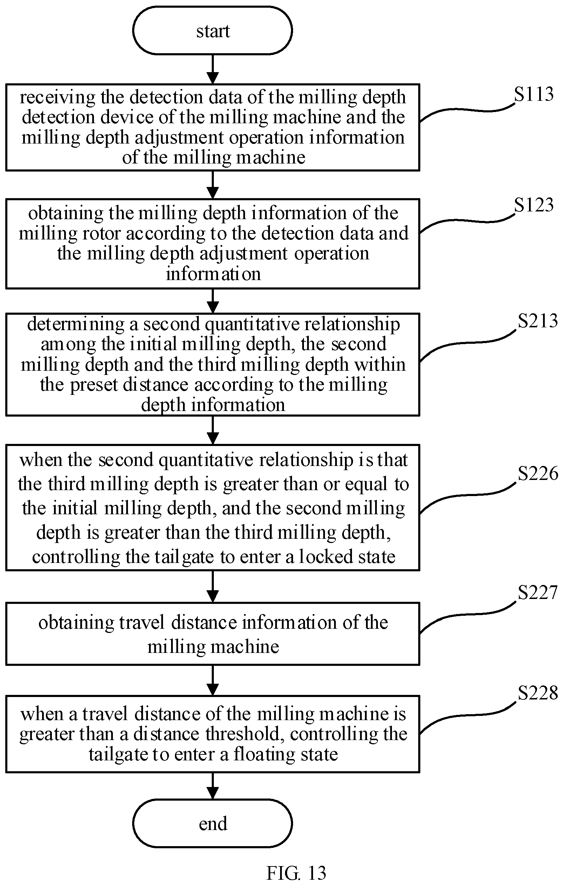

In another specific embodiment of the present application, as shown in FIG 13, the method for controlling the milling machine tailgate includes:
operation S113, receiving the detection data of the milling depth detection device of the milling machine and the milling depth adjustment operation information of the milling machine;
operation S123, obtaining the milling depth information of the milling rotor according to the detection data and the milling depth adjustment operation information;
operation S213, determining a second quantitative relationship among the initial milling depth, the second milling depth and the third milling depth within the preset distance according to the milling depth information;
operation S226, when the second quantitative relationship is that the third milling depth is greater than or equal to the initial milling depth, and the second milling depth is greater than the third milling depth, controlling the tailgate to enter a locked state;
operation S227, obtaining travel distance information of the milling machine; and
operation S228, when a travel distance of the milling machine is greater than a distance threshold, controlling the tailgate to enter a floating state.

The milling depth information includes the initial milling depth, the second milling depth after the first change, and the third milling depth after the second change. The initial milling depth is the milling depth when the milling rotor is milling at the current position of the milling machine tailgate. The distance threshold is the horizontal distance between the tailgate and the cutting surface of the milling rotor.

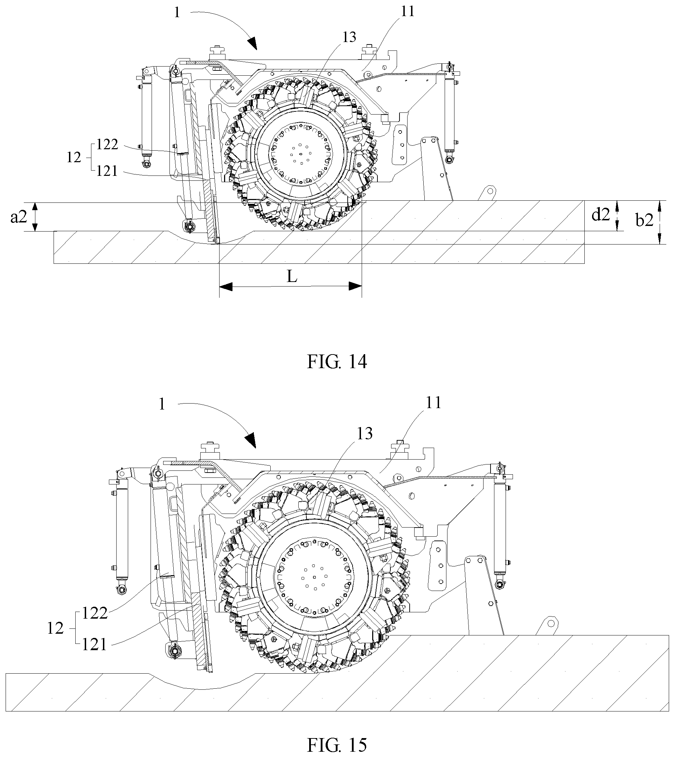

In this embodiment, during the operation of the milling machine, the milling depth of the milling rotor is detected by the milling depth detection device. When the outrigger mechanism of the milling machine sinks into a subsidence (such as sinking into a pit), the whole car body of the milling machine descends. As a result, the milling depth of the milling rotor increases, such that the initial milling depth a2 in FIG 14 becomes the second milling depth b2. Under this circumstance, the milling depth of the milling rotor is usually adjusted, as shown in FIG 14, the second milling depth b2 is adjusted to the third milling depth d2, in practice, the milling depth is usually restored to the initial milling depth, i.e., d2=a2. Correspondingly, the road surface is cut by the milling rotor to form a pit. If the tailgate is in a floating state, it will sink into the pit, such as the state shown in FIG 14, which is easily blocked by the upper step structure formed by the side wall of the pit, resulting in a stuck phenomenon.

The milling depth information is obtained through the detection data and the milling depth adjustment operation information, and then the initial milling depth a2, the second milling depth b2 and the third milling depth d2 in the milling depth information are obtained. For example, the initial milling depth a2 and the second milling depth b2 can be obtained through the detection data, and the third milling depth d2 can be obtained through the milling depth adjustment operation information. The second quantitative relationship among the initial milling depth a2, the second milling depth b2 and the third milling depth d2 is determined by comparing the sizes. When the second quantitative relationship is that the second milling depth b2 is greater than the third milling depth d2, and the third milling depth d2 is not less than the initial milling depth a2, it indicates that the road surface has indeed formed a pit. By adjusting the working state of the tailgate, the tailgate is controlled to enter the locked state from the floating state before the tailgate passes through the pit, which is as shown in FIG 15, the tailgate will not drop when passing through the pit, so as to ensure that the tailgate can pass over the pit smoothly without being blocked.

This embodiment aims at the working condition of pits formed on the road surface due to changes in road conditions, the tailgate can adaptively adjust its working state as the milling depth changes, so as to pass over the pits and realize follow-up control.

It should be noted that the above are only some embodiments of the method for controlling the milling machine tailgate in the present application. Different method steps can also be combined with each other, which will not be repeated herein.

In an embodiment of the present application, a milling working device 1 is further provided.

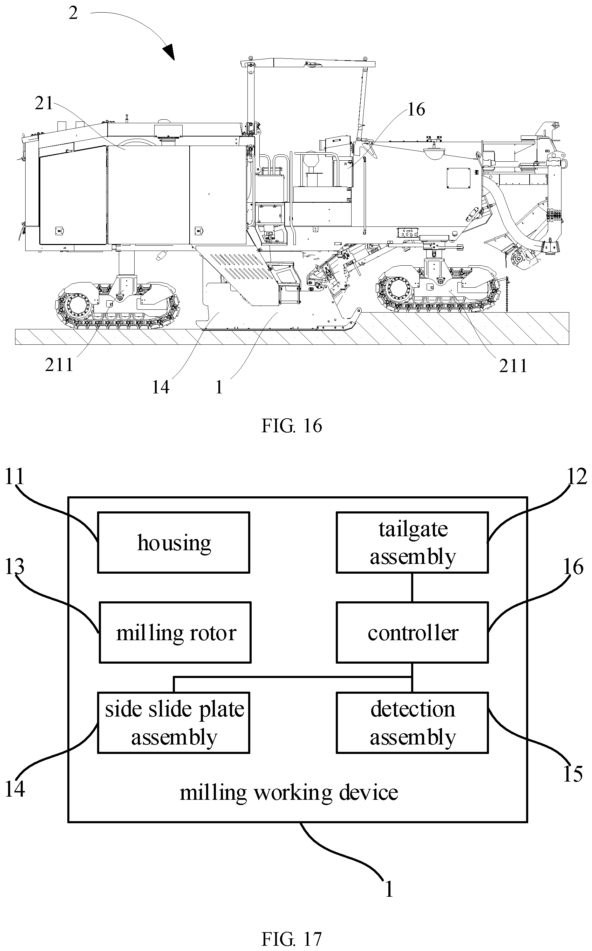

As shown in FIG 16, FIG 17 and FIG 18, the milling working device 1 includes a housing 11, a tailgate assembly 12, a milling rotor 13, a side slide plate assembly 14, a detection assembly 15, and a controller 16. The housing 11 is the installation base of the milling working device 1 and can be connected with the body of the milling machine 2. A bottom of the housing 11 is open. The milling rotor 13 is rotatably provided in the housing 11, the bottom of the milling rotor 13 can be in contact with the road surface, and the milling rotor 13 can cut the road surface through the rotation of the milling rotor 13. The tailgate assembly 12 is connected to the tail of the housing 11 to block and collect the waste generated by the cutting operation. The tailgate assembly 12 has a floating state, a locked state and a moving state (including rising and falling), and is in a floating state during operation. The side slide plate assembly 14 is provided on opposite sides of the housing 11. During the operation of the side slide plate assembly 14, the bottom of the side slide plate assembly 14 is in contact with the road surface, and can move up and down relative to the housing 11. The side slide plate assembly 14 is provided with the detection assembly 15 for detecting the milling depth of the milling rotor 13. The controller 16 is communicated with the detection assembly 15, the tailgate assembly 12 and the side slide plate assembly 14, so as to receive the detection data of the detection assembly 15, and obtain the milling depth information of the milling rotor 13 according to the detection data. The controller 16 can also control the tailgate assembly 12 and the side slide assembly 14 to work, and implement the method for controlling the milling machine tailgate in any of the above-mentioned embodiments.

In this embodiment, the milling working device 1 can perform milling and cutting operations, and can control the tailgate assembly 12 to perform corresponding obstacle avoidance operations according to the change of the milling depth, realizing the follow-up control of the tailgate assembly 12, which can effectively prevent the tailgate assembly 12 from being stuck due to obstacles.

Besides, the milling working device 1 in this embodiment also has all the beneficial effects of the method for controlling the milling machine tailgate in any of the above-mentioned embodiments, which will not be repeated herein.

In some embodiments of the present application, as shown in FIG 8, FIG 16, and FIG 18, the tailgate assembly 12 includes a tailgate 121 and a tailgate oil cylinder 122, and the side slide plate assembly 14 includes a plurality of side slide plates 141 and a plurality of side plate oil cylinders 142.

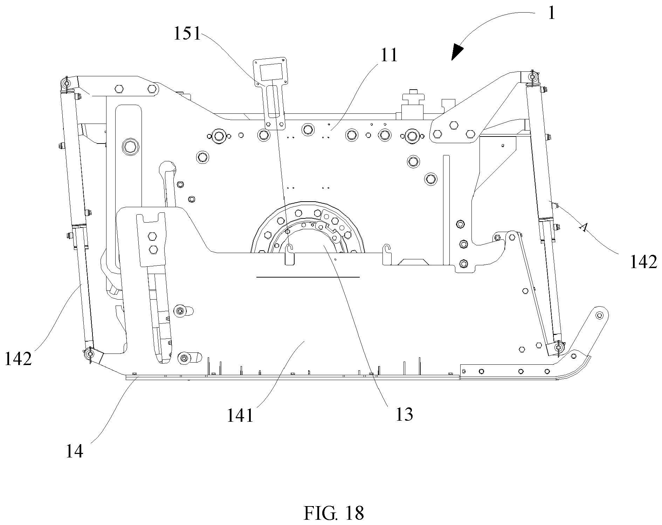

The tailgate 121 is movably connected with the tail of the housing 11. One end of the tailgate oil cylinder 122 is connected to the tailgate 121, and the other end of the tailgate oil cylinder 122 is connected to the housing 11 so that the telescopic movement of the tailgate oil cylinder 122 drives the tailgate 121 to move up and down relative to the housing 11. Both sides of the housing 11 are provided with side slide plates 141. As shown in FIG 18, a side slide plate 141 is provided on both sides of the housing 11. Each side slide plate 141 is provided with a plurality of side plate oil cylinders 142, and the plurality of side plate oil cylinders 142 are arranged at intervals along the travel direction. One end of each side plate oil cylinder 142 is connected with the housing 11 and the other end of each side plate oil cylinder 142 is connected with the side slide plate 141, so that the side slide plate 141 can be driven up and down by the telescopic movement of the side plate oil cylinder 142.

During normal operation, both the tailgate 121 and the side slide plate 141 are in a floating state. The controller 16 is communicated with the tailgate oil cylinder 122 and the side plate oil cylinder 142 to control the tailgate oil cylinder 122 and the side plate oil cylinder 142 to work so as to realize the lifting movement of the tailgate 121 and the side slide plate 141.

In some embodiments of the present application, as shown in FIG 18, the detection assembly 15 includes a pull cord sensor 151. The pull cord sensor 151 is provided on the housing 11 and is located above the side slide plate 141. The pull cord of pull cord sensor 151 is connected with corresponding side slide plate 141. Since the side slide plate 141 is in a floating state during operation, the expansion and contraction of the side slide plate 141 corresponds to the milling depth of the milling rotor 13. The pull cord sensor 151 can obtain the milling depth information of the milling rotor 13 by detecting the expansion and contraction of the side slide plate 141. Each side slide plate 141 can be correspondingly provided with the pull cord sensor 151.

In another implementation of this embodiment, the detection assembly 15 includes a displacement sensor, which is provided in the side plate oil cylinder 142, and the milling depth information of the milling rotor 13 can be obtained by detecting the expansion and contraction of the side plate oil cylinder 142. The side plate oil cylinder 142 with the displacement sensor can be used.

In the application of the milling working device 1 of the present application, the controller 16 can obtain the milling depth information of the milling rotor 13 according to the detection data of the detection assembly 15 and the received milling depth adjustment operation information, and control the tailgate oil cylinder 122 of the tailgate assembly 12 according to the change of the milling depth of the milling rotor 13 to control the working state of the tailgate 121.

During the operation of the milling machine 2, if the controller 16 of the milling working device 1 receives the milling depth adjustment operation information for reducing the milling depth, after the adjustment operation, the cutting process of the milling rotor will form an upper step structure on the road surface, as shown in the examples in FIG 8 and FIG 9. At this time, the controller 16 determines the height of the upper step structure according to the change value of the milling depth (that is, the first depth difference c1), then controls the tailgate 121 to rise to the first height h1 and maintains the locked state, and h1 is not less than c1, so that the tailgate 121 rises to the top of the upper step structure. Afterwards, when the travel distance of the milling machine 2 exceeds the distance threshold L (the horizontal distance from the tailgate 121 to the cutting surface of the milling rotor 13), the tailgate 121 has crossed the upper step structure, and the tailgate 121 is controlled to return to the floating state, so that the tailgate 121 is again attached to the road surface.

In another circumstance, when the outrigger mechanism 211 of the milling machine 2 encounters a protrusion, it will drive the milling rotor 13 to rise together, resulting in a reduction in the milling depth, as shown in the examples in FIG 11 and FIG 12. After the detection assembly 15 of the milling working device 1 detects that the milling depth of the milling rotor 13 decreases, the controller 16 can determine that there is a protrusion on the road surface according to the change of the milling depth, and can determine the height of the protrusion (that is, the first depth difference c1), then control the tailgate 121 to rise to the first height h1 and maintain the locked state, and h1 is not less than c1, so that the tailgate 121 rises above the protrusion. Afterwards, when the travel distance of the milling machine 2 exceeds the distance threshold L (the horizontal distance from the tailgate 121 to the cutting surface of the milling rotor 13), after the tailgate 121 has crossed the protrusion, the tailgate 121 is controlled to return to the floating state at this time, so that the tailgate 121 can be attached to the road surface again.

In another circumstance, when the outrigger mechanism 211 of the milling machine 2 sinks during driving, it will drive the milling rotor 13 to descend together, causing the milling depth to increase, as shown in the examples in FIG 14 and FIG 15, the initial milling depth a2 becomes the second milling depth b2. At this time, the controller 16 usually receives the milling depth adjustment operation information to adjust the milling depth of the milling rotor 13, and adjust the second milling depth b2 to d2. In practice, the milling depth is usually restored to the initial milling depth, that is, d2 is equal to a2. Correspondingly, the road surface will be cut by the milling rotor 13 to form a pit. If the tailgate 121 is in a floating state, it will sink into the pit, as shown in FIG 14, and it is easily blocked by the upper step structure formed by the side wall of the pit, resulting in a stuck phenomenon. After the controller 16 acquires the milling depth information of the milling rotor 13 according to the detection data of the detection assembly 15 and the milling depth adjustment operation information, the controller determines that pits have appeared on the road surface according to the quantitative relationship among the initial milling depth a2, the second milling depth b2 and the third milling depth d2. The tailgate 121 is controlled to enter the locked state before passing through the pit, as shown in FIG 15, and when the travel distance of the milling machine 2 is greater than the distance threshold L (the horizontal distance from the tailgate 121 to the cutting surface of the milling rotor 13), after the tailgate 121 has crossed the pit, the tailgate 121 is controlled to return to the floating state, so that the tailgate 121 is again attached to the road surface.

The present application further provides a milling machine 2, as shown in FIG 16, including: a milling machine body 21 and the milling working device 1 according to any one of the above embodiments. The milling working device 1 is provided on the milling working position (such as the bottom of the body) of the milling machine body 21, so that the milling working device 1 is driven by the milling machine body 21 to travel. During the driving process, the milling rotor 13 of the milling device 1 performs a cutting operation on the road surface through the relative rotation of the milling rotor 13. When the milling depth of the milling rotor 13 changes, the tailgate assembly 12 can perform corresponding obstacle avoidance operations to realize follow-up control, which can effectively prevent the tailgate assembly 12 from being stuck with road obstacles, thereby preventing damage to the engine and improving work efficiency.

In addition, the milling machine 2 in this embodiment should have all the beneficial effects of the milling working device 1 in any of the above-mentioned embodiments, which will not be repeated here.

The present application further provides an electronic device. The electronic device may include: a processor, a communication interface, a memory and a communication bus. The processor, the communication interface, and the memory complete the mutual communication through the communication bus. The processor can call the logic instructions in the memory to execute the method for controlling the milling machine tailgate in any of the above embodiments. The electronic device in this embodiment has all the beneficial effects of the method for controlling the milling machine tailgate in any of the above embodiments, and details are not repeated herein.

In the present application, it can be understood that any process or method descriptions in flowcharts or otherwise described herein may be understood to represent a module, segment or portion of code including one or more executable instructions for implementing the steps of a particular logical function or process. The scope of the embodiments of the present application includes additional implementations, which may not be in the order shown or discussed, including performing functions in a substantially simultaneous manner or in reverse order depending on the functions involved, as will be understood by those skilled in the art to which embodiments of the present application pertain.

The logic and/or steps represented in a flowchart or otherwise described herein may be considered to be a sequenced listing of executable instructions for implementing the logical functions, can be embodied in any computer-readable medium for use by or in conjunction with an instruction execution system, apparatus or device (such as a computer-based system, a system including a processor, or other system that can fetch and execute instructions from an instruction execution system, apparatus, or device). For the purposes of this specification, a "computer-readable medium" may be any device that can contain, store, communicate, propagate or transmit a program for use in or in conjunction with an instruction execution system, apparatus or device. More specific examples (non-exhaustive list) of computer readable media include the following: electrical connections with one or more wires (electronic devices), portable computer disk cases (magnetic devices), random access memory (RAM), read only memory (ROM), erasable and editable read-only memory (EPROM or flash memory), fiber optic devices, and portable compact disc read-only memory (CDROM). In addition, the computer-readable medium may even be paper on which the program can be printed or other suitable medium. Because the program can be obtained electronically, for example by optical scanning of paper or other medium, followed by editing, interpretation or other suitable processing if necessary, and then storing it in a computer memory.

It should be understood that various parts of the present application may be implemented in hardware, software, firmware or a combination thereof. In the embodiments described above, various steps or methods may be implemented by software or firmware stored in memory and executed by a suitable instruction execution system. For example, if it is implemented by hardware, as in another embodiment, it can be implemented by any one or a combination of the following techniques known in the art: discrete logic circuits with logic gates for implementing logic functions on data signals, ASICs with suitable combinational logic gates, programmable gate arrays (PGA), field programmable gate arrays (FPGA), etc. Those of ordinary skill in the art can understand that all or part of the steps carried by the methods of the above embodiments can be completed by instructing related hardware through programs. The program can be stored in a computer-readable storage medium, and when the program is executed, it includes one or a combination of the steps of the method embodiments. In addition, each functional unit in each embodiment of the present application may be integrated into one processing module, each unit may exist separately physically, or two or more units may be integrated into one module. The above-mentioned integrated modules can be implemented in the form of hardware or in the form of software function modules. If the integrated modules are realized in the form of software function modules and sold or used as independent products, they can also be stored in a computer-readable storage medium. The storage medium mentioned above may be a read-only memory, a magnetic disk or an optical disk, and the like.

The above are only some embodiments of the present application, and are not intended to limit the present application. For those skilled in the art, the present application may have various modifications and changes. Any modifications, equivalent replacements, improvements, etc. made within the principles of the present application shall be included within the scope of the present application.

## Claims

1. A method for controlling a milling machine tailgate, **characterized by** comprising:
operation S100, obtaining milling depth information of a milling rotor of a milling machine; and
operation S200, controlling a working state of the milling machine tailgate according to the milling depth information.

2. The method for controlling the milling machine tailgate according to claim 1, wherein the milling depth information comprises an initial milling depth and a changed milling depth of the milling rotor;
the operation S200 comprises:
operation 210, determining a quantitative relationship between the initial milling depth and the changed milling depth within a preset distance according to the milling depth information; and
operation S220, controlling the working state of the tailgate according to the quantitative relationship.

3. The method for controlling the milling machine tailgate according to claim 2, wherein the changed milling depth comprises a first milling depth;
the operation S210 comprises:
operation S211, determining a first quantitative relationship between the initial milling depth and the first milling depth within the preset distance according to the milling depth information;
the operation S220 comprises:
operation S221, when the first quantitative relationship is that the first milling depth is less than the initial milling depth, determining a first depth difference between the initial milling depth and the first milling depth according to the first quantitative relationship;
operation S222, controlling the tailgate to rise to a first height and maintaining a locked state according to the first depth difference;
operation S223, obtaining travel distance information of the milling machine; and
operation S224, when a travel distance of the milling machine is greater than a distance threshold, controlling the tailgate to enter a floating state,
wherein the first height is greater than or equal to the first depth difference.

4. The method for controlling the milling machine tailgate according to claim 2, wherein the changed milling depth includes a second milling depth and a third milling depth, the second milling depth corresponds to the milling depth after a first change of the initial milling depth, and the third milling depth corresponds to the milling depth after a second change of the initial milling depth;
the operation S210 comprises:
operation S213, determining a second quantitative relationship among the initial milling depth, the second milling depth and the third milling depth within the preset distance according to the milling depth information;
the operation S220 comprises:
operation S226, when the second quantitative relationship is that the third milling depth is greater than or equal to the initial milling depth, and the second milling depth is greater than the third milling depth, controlling the tailgate to enter a locked state;
operation S227, obtaining travel distance information of the milling machine; and
operation S228, when a travel distance of the milling machine is greater than a distance threshold, controlling the tailgate to enter a floating state.

5. The method for controlling the milling machine tailgate according to claim 2, wherein the changed milling depth comprises a second milling depth and a third milling depth, the second milling depth corresponds to the milling depth after a first change of the initial milling depth, and the third milling depth corresponds to the milling depth after a second change of the initial milling depth;
the operation S210 comprises:
operation S215, determining a third quantitative relationship among the initial milling depth, the second milling depth and the third milling depth within the preset distance according to the milling depth information;
the operation S220 comprises:
operation S231, when the third quantitative relationship is that the second milling depth is greater than the initial milling depth and the third milling depth is less than the initial milling depth, determining a second depth difference between the initial milling depth and the third milling depth according to the third quantitative relationship;
operation S232, controlling the tailgate to rise to a second height and maintaining a locked state according to the second depth difference;
operation S233, obtaining travel distance information of the milling machine; and
operation S234, when a travel distance of the milling machine is greater than a distance threshold, controlling the tailgate to enter a floating state,
wherein the second height is greater than or equal to the second depth difference.

6. The method for controlling the milling machine tailgate according to any one of claims 1 to 5, wherein the operation S100 comprises:
operation S 110, receiving detection data of a milling depth detection device of the milling machine and/or milling depth adjustment operation information of the milling machine; and
operation S 120, obtaining the milling depth information of the milling rotor according to the detection data and/or the milling depth adjustment operation information.

7. A milling working device, **characterized by** comprising:
a housing, wherein a bottom of the housing is open, and a tail of the housing is provided with a liftable tailgate assembly;
a milling rotor rotatably provided in the housing;
a side slide plate assembly provided on opposite sides of the housing and moving up and down relative to the housing;
a detection assembly connected to the side slide plate assembly to detect a milling depth of the milling rotor; and
a controller communicated with the detection assembly, the tailgate assembly and the side slide plate assembly, wherein the controller is configured to realize the method for controlling the milling machine tailgate according to any one of claims 1 to 6.

8. The milling working device according to claim 7, wherein:
the tailgate assembly comprises a tailgate and a tailgate oil cylinder, one end of the tailgate oil cylinder is connected to the tailgate, and the other end of the tailgate oil cylinder is connected to the housing to drive the tailgate to move up and down;
the side slide plate assembly comprises a plurality of side slide plates and a plurality of side plate oil cylinders, each side slide plate is provided with the plurality of side plate oil cylinders, one end of each side plate oil cylinder is connected to the corresponding side slide plate, and the other end of each side plate oil cylinder is connected to the housing to drive the side slide plate to move up and down; and
the controller is communicated with the tailgate oil cylinder and the side plate oil cylinder.

9. The milling working device according to claim 8, wherein the detection assembly comprises:
a pull cord sensor provided on the housing and located above the side slide plate, a pull cord of the pull cord sensor being connected to the corresponding side slide plate; and/or
a displacement sensor provided in the side plate oil cylinder.

10. A milling machine, **characterized by** comprising:
a milling machine body; and
the milling working device according to any one of claims 7 to 9,
wherein the milling working device is provided at a milling working position of the milling machine body.

11. An electronic device, **characterized by** comprising:
a memory;
a processor; and
a computer program stored on the memory and executable on the processor,
wherein when the program is executed by the processor, the method for controlling the milling machine tailgate according to any one of claims 1 to 6 is realized.

12. A computer-readable storage medium, **characterized in that**, a computer program is stored on the computer-readable storage medium, and when the computer program is executed by a processor, the method for controlling the milling machine tailgate according to any one of claims 1 to 6 is realized.
